# EUROPEAN PATENT APPLICATION

(11) **EP 2 840 502 A1**
(43) Date of publication of application: **25.02.2015**
(21) Application number: 12874716.9
(22) Date of filing: 17.04.2012
(51) Int. Cl.: G06F 12/02

(54) **MANAGEMENT METHOD AND APPARATUS FOR ON-CHIP SHARED CACHE**

(71) Applicant: ZTE Corporation, Shenzhen, Guangdong 518057 (CN)
(72) Inventor: WANG, Baling, Shenzhen Guangdong 518057 (CN); SHI, Yijun, Shenzhen Guangdong 518057 (CN)
(74) Representative: Tischner, Oliver
(86) International application number: PCT/CN2012/074226
(87) International publication number: WO 2013/155673

(57) **Abstract**

The present disclosure relates to techniques for sharing storage cells, and discloses a method and device for managing an on-chip shared memory, for use in sharing of one on-chip memory, and the method includes: a shared storage space is set as a storage resource pool consisting of a plurality of storage cells, a storage table is set that records idle storage cells in the storage resource pool, and a resource occupying table is set that indicates the status of the memory cells occupied by each user. In this way, when storage resources are allocated, the required number of storage cells for a user are selected from the storage table, the selected storage cells are recorded into entries corresponding to the user in the resource occupying table; after the user finishes using allocated storage cells, storage cells occupied by the user are read from the entries corresponding to the user in the resource occupying table and recorded into the storage table. The technical solution according to embodiments of the present disclosure can meet a demand of storing data of multiple users with a storage resource pool of a memory, which has relatively small capacity.

## Description

### TECHNICAL FIELD

The present disclosure relates to techniques for sharing storage cells, and in particular to a method and device for managing an on-chip shared memory.

### BACKGROUD

During demodulation of a baseband physical layer data channel of a Wideband Code Division Multiple Access (WCDMA) base station (NodeB), it is desired to store an intermediate result accumulated from multiple chips during multipath demodulation, since data channels of different users may have different Spreading Factors (SFs), accumulation of each SF chips gets a multipath symbol, and each symbol needs to be stored independently. Thus, during a same period of time, numbers of intermediate multipath symbols stored by different users are different.

For such a case, a typical processing method is that storage space is allocated to each user according to a minimum SF. In this way, it is ensured that multipath symbols of respective users can be stored correctly when there are changes in respective SFs. But in practical application scenarios, since it is not possible that all users use a minimum SF, instead, there is a distribution of different SF values, if memories are allocated to all users according to a minimum SF, it will inevitably result in a waste of overall storage space.

### SUMMARY

The present disclosure provide a method and device for managing an on-chip shared memory, which are capable of setting an appropriate shared storage resource pool for multiple users so as to meet a demand of storing data of multiple users with relatively small memory space.

Specific technical solutions provided by embodiments of the present disclosure are as follows.

A method for managing an on-chip shared memory, in which a shared storage space is set as a storage resource pool consisting of a plurality of storage cells; a storage table is set that records idle storage cells in the storage resource pool; and a resource occupying table is set that indicates the status of the storage cell occupied by each user; the method includes:
when storage resources are allocated, the required number of storage cells for a user are selected from the storage table, the selected storage cells are recorded into entries corresponding to the user in the resource occupying table;
after the user finishes using allocated storage cells, storage cells occupied by the user are read from the entries corresponding to the user in the resource occupying table and recorded into the storage table.

In an embodiment, the method may further include: an identifier is set for every storage cell in the storage resource pool;
identification information of the idle storage cells is recorded into the storage table;
identification information of the storage cells occupied by the user is recorded into the resource occupying table.

In an embodiment, the resource occupying table being set that indicates the status of the storage cells occupied by each user, may include:
storage entries the number of which is equal to the number of storage cells that the user can occupy at the most, are set for each user, with each storage entry recording identification information of one storage cell occupied by the user.

In an embodiment, each storage cell in the storage resource pool has a same size, and the size of the storage cell is matched with a minimum storage demand of the user.

In an embodiment, the size of the storage cell being matched with a minimum storage demand of the user, may include:
the size of the storage cell is the same as the minimum storage demand of the user; or the size of the storage cell is larger than the minimum storage demand of the user.

A device for managing an on-chip shared memory includes a setting unit, an allocation unit, a recovery unit and a record unit.

The setting unit is configured to set a shared storage space as a storage resource pool consisting of a plurality of storage cells; set a storage table that records idle storage cells in the storage resource pool; and set a resource occupying table that indicates the status of the memory cells occupied by each user;
the allocation unit is configured to, when storage resources are allocated to a user, select the required number of storage cells for the user from the storage table;
the recovery unit is configured to, after the user finishes using allocated storage cells, read storage cells occupied by the user from entries corresponding to the user in the resource occupying table; and
the record unit is configured to record storage cells selected by the allocation unit into the entries corresponding to the user in the resource occupying table and record storage cells selected by the recovery unit into the storage unit.

In an embodiment, the setting unit may be further configured to set an identifier for every storage cell in the storage resource pool;
the record unit may be further configured to record identification information of the idle storage cells into the storage table, and record identification information of the storage cells occupied by the user into the resource occupying table.

In an embodiment, the setting unit being configured to set the resource occupying table, may include: setting, for each user, storage entries the number of which is equal to the number of storage cells that the user can occupy at the most, with each storage entry recording identification information of one storage cell occupied by the user.

In an embodiment, each storage cell in the storage resource pool has a same size, and the size of the storage cell is matched with a minimum storage demand of the user.

In an embodiment, the size of the storage cell being matched with a minimum storage demand of the user, may include:
the size of the storage cell is the same as the minimum storage demand of the user; or the size of the storage cell is larger than the minimum storage demand of the user.

In embodiments of the present disclosure, a shared storage space is set as a storage resource pool consisting of a plurality of storage cells; a storage table is set that records idle storage cells in the storage resource pool; and a resource occupying table is set that indicates the status of the memory cells occupied by each user; in this way, when storage resources are allocated, the required number of storage cells for a user are selected from the storage table, selected storage cells are recorded into entries corresponding to the user in the resource occupying table; after the user finishes using allocated storage cells, storage cells occupied by the user are read from the entries corresponding to the user in the resource occupying table and recorded into the storage table. In this way, the technical solution according to embodiments of the present disclosure can meet a demand of storing data of multiple users with a storage resource pool of a memory, which has relatively small capacity. The technical solution according to embodiments of the present disclosure is suitable in particular for demodulation of a baseband physical layer data channel of a NodeB of a WCDMA system.

### BRIEF DESCRIPTION OF THE DRAWINGS

Fig, 1 is a schematic structural diagram of a storage resource pool according to an embodiment of the present disclosure;
Fig, 2 is a schematic structural diagram of a storage table according to an embodiment of the present disclosure;
Fig, 3 is a schematic structural diagram of a resource occupying table according to an embodiment of the present disclosure; and

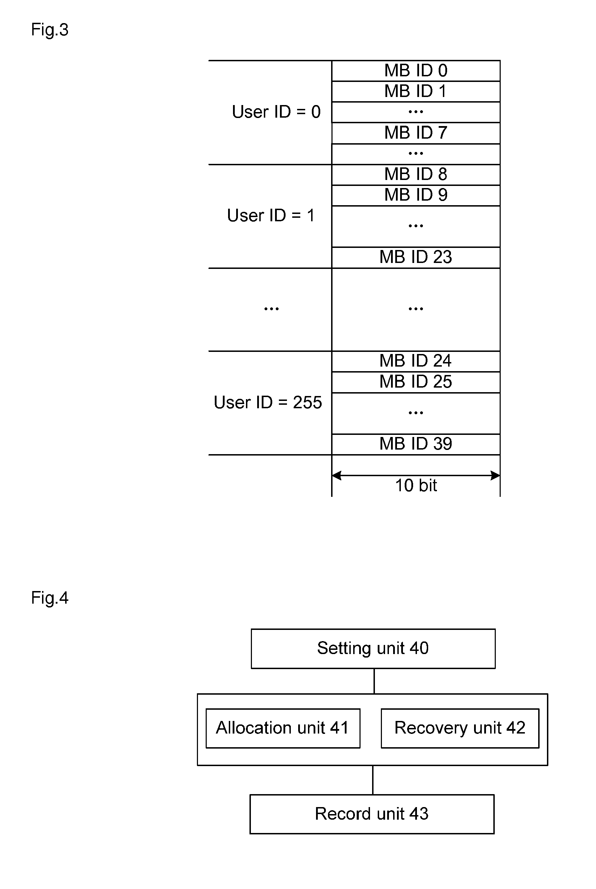

Fig. 4 is a schematic structural diagram of a device for managing an on-chip shared memory according to an embodiment of the present disclosure.

### DETAILED DESCRIPTION

Basic spirits of the present disclosure are: a shared storage space is set as a storage resource pool consisting of a plurality of storage cells; a storage table is set that records idle storage cells in the storage resource pool; and a resource occupying table is set that indicates the status of the memory cells occupied by each user; in this way, when storage resources are allocated, the required number of storage cells for a user are selected from the storage table, the selected storage cells are recorded into entries corresponding to the user in the resource occupying table; after the user finishes using allocated storage cells, storage cells occupied by the user are read from the entries corresponding to the user in the resource occupying table and recorded into the storage table.

Preferred embodiments of the present disclosure will be elaborated below with reference to the drawings.

In the present disclosure, storage space shared by multiple users is set as a storage resource pool, i.e., the storage space shared by multiple users is divided into multiple small storage cells, the size of each of the multiple storage cells is matched with a minimum storage demand of a user, a minimum storage cell is referred to as a Minimum Block (MB), the entire shared storage space consists of an integer number of MBs, identifiers (IDs) are set for respective MBs, and MBs are differentiated by their respective MB IDs. In an embodiment, the size of the storage cell is matched with the minimum storage demand of the user, may include: the size of the storage cell is the same as the minimum storage demand of the user; or the size of the storage cell is larger than the minimum storage demand of the user.

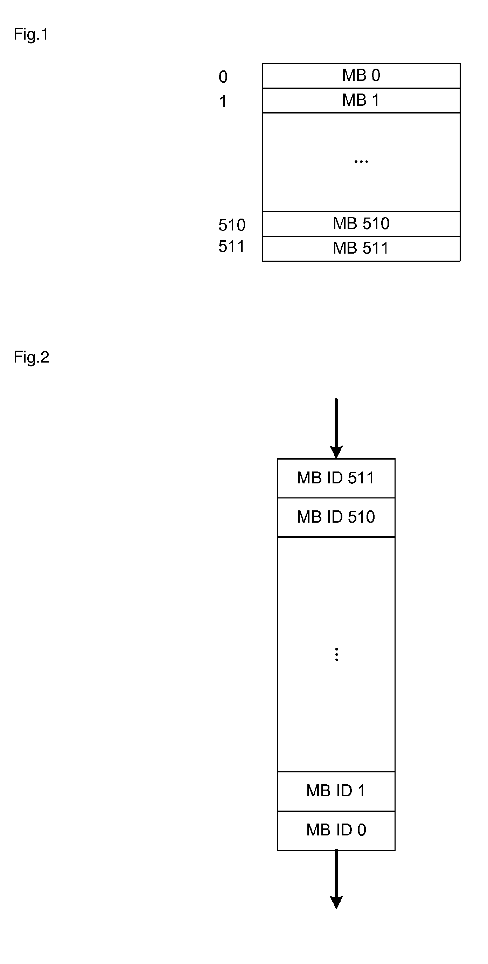

Fig. 1 is a schematic structural diagram of a storage resource pool according to an embodiment of the present disclosure, as shown in Fig. 1, a storage resource pool consisting of 512 MBs is exemplified, and MB0 to MB511 represent identifiers of MBs.

In the present disclosure, it is also desired to set a storage table for storing MBs that are not occupied by any users. The storage table is implemented in a First In First Out (FIFO) storage manner, and in its initial state the storage table stores all MB IDs of the entire storage resource pool, that is to say, in the initial state all MBs in the storage resource pool are not occupied, i.e., available for users.

Fig. 2 is a schematic structural diagram of a storage table according to an embodiment of the present disclosure, and it is a schematic diagram of the storage table in its initial state.

In the present disclosure, it is also desired to set a resource occupying table for each user, each user has same number of entries in his/her corresponding resource occupying table, the maximum number of entries of a user in the resource occupying table is set according to the maximum number of MBs desired to be occupied by the user in an application scenario, and each entry is used to store an MB allocated to the user.

Fig. 3 is a schematic structural diagram of a resource occupying table according to an embodiment of the present disclosure, as shown in Fig. 3, there are totally 256 users, each user can occupy 16 MBs at the most, but for other application scenarios, each user can occupy a different number of MBs.

When a user needs to occupy storage resources, a specified number of MBs are applied in the storage table, then MB IDs of all MBs allocated to the user are stored into entries corresponding to the user in the resource occupying table, thus allocation of MBs is implemented.

When a user finishes using allocated MBs, MB IDs of all MBs allocated to the user are read from the entries corresponding to the user in the resource occupying table, and then read MB IDs are recorded into the storage table, thus recovery of MBs is implemented.

In the present disclosure, through allocation and recovery of MBs, a function of sharing a resource pool by multiple users can then be implemented.

The technical solution according to embodiments of the present disclosure is suitable in particular for demodulation of a baseband physical layer data channel of a NodeB of a WCDMA system, for example suitable for the aforementioned intermediate result accumulated from multiple chips during multipath demodulation.

The essence of the technical solution of the present disclosure will be further explained through a specific example.

It is assumed that a memory region includes totally 512 MBs, each MB is a minimum unit of granularity of the memory region, the size of memory resources occupied by each user when using the memory region is an integral multiple of MB, and the schematic structral diagram of the memory region is as shown in Fig. 1.

It is further assumed that there are totally 256 users to share the memory region, wherein each user can use 16 MBs at the most, that is to say, the memory region consisting of 512 MBs are shared by 256 users. A method for managing the memory region shared by 256 users is discussed as follows.

In Fig. 1, there are totally 512 MBs, each MB is set with an MB ID, as shown in Fig. 1, for MB 0, MB ID=0; for MB 1, MB ID=1; ...; and for MB 511, MB ID=511.

As shown in Fig. 2, a storage table records MBs of the memory region, which are currently in an idle state, a certain number of MBs are selected from the storage table when MBs are allocated to a newly-established user, and when MBs used by a user are deleted, all MB resources allocated to the user are recorded into the storage table.

The storage table can be implemented through an FIFO storage, taking the storage table shown in Fig. 2 as an example, an FIFO storage with a depth of 512 and a width of 9 bytes is enough to implement the storage table. Each cell of the FIFO storage can record an MB ID of an idle MB. The storage table is full in its initial state, which represents that there are 512 idle MBs available at the beginning. Allocating MB resources corresponds to reading corresponding MB IDs from the FIFO storage while recovering MB resources corresponds to recording into the storage table MB IDs desired to be recovered.

A resource occupying table records MB resource occupying status of each user during operation, and MB resources currently occupied by each user can be obtained form the resource occupying table.

The resource occupying table can be implemented through a dual-ported RAM, taking the resource occupying table shown in Fig. 3 as an example, a dual-ported RAM with a depth of 256*16=4096 and a width of 10 bytes is enough to implement the resource occupying table. Each cell can record an MB ID of a certain MB resource allocated to a user in operation. In the resource occupying table, a user ID is indexed to storage entries of the user, and the entries of each user occupy 16 consecutive address cells. When MB resources are allocated for users, allocated MB IDs are recorded into positions corresponding to storage entries of the user in the resource occupying table.

When it is desired to allocate MB resources for a user, MBs desired by an MB resource instruction is selected from the storage table as shown in Fig. 2, IDs of selected MBs are recorded into positions corresponding to storage entries of the user in the resource occupying table, thus allocation of MB resources for the user is implemented.

When a user has no services and thus doesn't need any MBs, according to an MB resource recovery instruction, MBs in the storage entries of the user are read from the resource occupying table, and IDs of these MBs are recorded into the storage table, thus recovery of MB resources of the user is implemented.

The technical solution according to embodiments of the present disclosure can meet a demand of storing data of multiple users with a storage resource pool of a memory, which has relatively small capacity. The technical solution according to embodiments of the present disclosure is suitable in particular for demodulation of a baseband physical layer data channel of a NodeB of a WCDMA system.

Fig. 4 is a schematic structural diagram of a device for managing an on-chip shared memory according to an embodiment of the present disclosure, as shown in Fig. 4, the device for managing an on-chip shared memory according to the embodiment includes a setting unit 40, an allocation unit 41, a recovery unit 42 and a record unit 43.

The setting unit 40 is configured to set a shared storage space as a storage resource pool consisting of a plurality of storage cells; set a storage table that records idle storage cells in the storage resource pool; and set a resource occupying table that indicates the status of the memory cells occupied by each user;
the allocation unit 41 is configured to, when storage resources are allocated to a user, select the required number of storage cells for the user from the storage table;
the recovery unit 42 is configured to, after the user finishes using allocated storage cells, read storage cells occupied by the user from entries corresponding to the user in the resource occupying table; and
the record unit 43 is configured to record storage cells selected by the allocation unit into the entries corresponding to the user in the resource occupying table and record storage cells selected by the recovery unit into the storage unit.

The above setting unit 40 is further configured to set an identifier for every storage cell in the storage resource pool;
the record unit 43 is further configured to record into the storage table identification information of the idle storage cells and record into the resource occupying table identification information of the storage cells occupied by the user.

The above setting unit 40 is configured to set the resource occupying table, includes: to set for each user storage entries the number of which is equal to the number of storage cells that the user can occupy at the most, with each storage entry recording identification information of one storage cell occupied by the user.

Each storage cell in the storage resource pool has a same size, and the size of the storage cell is matched with a minimum storage demand of the user. In an embodiment, the size of the storage cell is matched with the minimum storage demand of the user, may include: the size of the storage cell is the same as the minimum storage demand of the user; or the size of the storage cell is larger than the minimum storage demand of the user.

The aforementioned storage table may be implemented by an FIFO storage, and the aforementioned resource occupying table may be implemented by a dual-ported RAM.

It should be appreciated by those skilled in the art that functions implemented by respective processing units of the device for managing an on-chip shared memory as shown in Fig. 4 can be understood with reference to above related description of the method for managing an on-chip shared memory. It should be appreciated by those skilled in the art that functions of respective processing units of the device for managing an on-chip shared memory as shown in Fig. 4 may be implemented through programs running on a processor, and may also be implemented through a specific logic circuit.

What described are merely preferable embodiments of the present disclosure, and are not intended to limit the present disclosure.

### INDUSTRIAL APPLICABILITY

The technical solution according to embodiments of the present disclosure can meet a demand of storing data of multiple users with a storage resource pool of a memory, which has relatively small capacity. The technical solution according to embodiments of the present disclosure is suitable in particular for demodulation of a baseband physical layer data channel of a NodeB of a WCDMA system.

## Claims

1. A method for managing an on-chip shared memory, wherein a shared storage space is set as a storage resource pool consisting of a plurality of storage cells; a storage table is set that records idle storage cells in the storage resource pool; and a resource occupying table is set that indicates the status of the memory cells occupied by each user; the method comprising:
when storage resources are allocated, selecting the required number of storage cells for a user from the storage table, recording the selected storage cells into entries corresponding to the user in the resource occupying table;
after the user finishes using allocated storage cells, reading storage cells occupied by the user from the entries corresponding to the user in the resource occupying table and recording the storage cells occupied by the user into the storage table.

2. The method according to claim 1, further comprising:
setting an identifier for every storage cell in the storage resource pool;
recording identification information of the idle storage cells into the storage table;
recording identification information of the storage cells occupied by the user into the resource occupying table.

3. The method according to claim 2, wherein the resource occupying table being set that indicates the status of the memory cells occupied by each user, comprises:
setting, for each user, storage entries the number of which is equal to the number of storage cells that the user can occupy at the most, with each storage entry recording identification information of one storage cell occupied by the user.

4. The method according to any one of claims 1 to 3, wherein each storage cell in the storage resource pool has a same size, and the size of the storage cell is matched with a minimum storage demand of the user.

5. The method according to claim 4, wherein the size of the storage cell being matched with a minimum storage demand of the user, comprises:
the size of the storage cell is the same as the minimum storage demand of the user; or the size of the storage cell is larger than the minimum storage demand of the user.

6. A device for managing an on-chip shared memory, comprising a setting unit, an allocation unit, a recovery unit and a record unit, wherein
the setting unit is configured to set a shared storage space as a storage resource pool consisting of a plurality of storage cells, set a storage table that records idle storage cells in the storage resource pool, and set a resource occupying table that indicates the status of the memory cells occupied by each user;
the allocation unit is configured to, when storage resources are allocated to a user, select the required number of storage cells for the user from the storage table;
the recovery unit is configured to, after the user finishes using allocated storage cells, read storage cells occupied by the user from entries corresponding to the user in the resource occupying table; and
the record unit is configured to record storage cells selected by the allocation unit into the entries corresponding to the user in the resource occupying table and record storage cells selected by the recovery unit into the storage unit.

7. The device according to claim 6, wherein the setting unit is further configured to set an identifier for every storage cell in the storage resource pool;
the record unit is further configured to record identification information of the idle storage cells into the storage table, and record identification information of the storage cells occupied by the user into the resource occupying table.

8. The device according to claim 7, wherein the setting unit being configured to set the resource occupying table, comprises: setting, for each user, storage entries the number of which is equal to the number of storage cells that the user can occupy at the most, with each storage entry recording identification information of one storage cell occupied by the user.

9. The device according to any one of claims 6 to 8, wherein each storage cell in the storage resource pool has a same size, and the size of the storage cell is matched with a minimum storage demand of the user.

10. The device according to claim 9, wherein the size of the storage cell being matched with a minimum storage demand of the user, comprises:
the size of the storage cell is the same as the minimum storage demand of the user; or the size of the storage cell is larger than the minimum storage demand of the user.
